# EUROPEAN PATENT APPLICATION

(11) **EP 0 936 381 A1**
(43) Date of publication of application: **18.08.1999**
(21) Application number: 98300973.9
(22) Date of filing: 10.02.1998
(51) Int. Cl.: F16H 29/04

(54) **Continuously variable transmission**

(30) Priority: 06.02.1998 US
(71) Applicant: Papanicolaou, John, Piraeus 185 38 (GR)
(72) Inventor: Papanicolaou, John, Piraeus 185 38 (GR)
(74) Representative: Lucas, Brian Ronald

(57) **Abstract**

Continuously variable transmission system that is capable of gradually and smoothly multiplying TORQUE while decreasing RPM and vice-versa. The infinitely and continuously variable TORQUE and RPM ratios are produced by causing a central assembly including a hub having one, two, three or more co-axial opposing pairs of short shafts (7,8,9,10) which share the same plane with each other and with the hub's multi-directional center and which are radially and symmetrically mounted on its outer perimeter, to oscillate around some or all of such short shaft axes. Each short shaft coaxially carries at its outer end a one-way clutch assembly that engages in one rotational direction of its carrying short shaft and disengages its carrying short shaft in the other direction. All such freewheels are in turn continuously and uni-directionally engaged to a common rotatable output gear (52) which is caused to rotate through a simultaneous combination of the short shaft oscillations and their one way engagement/disengagement freewheel action. The central assembly is caused to oscillate either through gradually pivoting a rotating swash plate (1) co-centrally mounted to and pressing against the oscillating central assembly (5) through a thrust bearing (4) or through gradually pivoting while rotatably displacing one pivotable and rotatably displacable yoke with respect to a second fixed and opposing yoke, wherein the yokes are connected to each other through the oscillating central assembly's short shafts.

## Description

### BACKGROUND OF THE INVENTION

The invention relates to a mechanical device that provides for an infinitely and continuously variable transmission system that is capable of gradually and smoothly multiplying TORQUE while decreasing RPM and vice-versa. For a given input shaft TORQUE and RPM, the system will deliver to the output shaft, through an infinite and continuous process, such increases or reductions in TORQUE with inversely corresponding increases or reductions in RPM as may be desired across a predetermined and very wide range of transmission ratios. The range can include zero RPM for the output shaft while the input shaft continues to rotate at any RPM, thus eliminating the need for an input shaft disengaging clutch. The infinitely and continuously variable TORQUE and RPM ratios are produced by causing a central assembly including a hub having one, two, three or more co-axial opposing pairs of short shafts which share the same plane with each other and with the hub's multi-directional center and which are radially and symmetrically mounted on its outer perimeter, to oscillate around some or all of such short shaft axes. Each short shaft coaxially carries at its outer end a one-way clutch "freewheel" that engages in one rotational direction of its carrying short shaft and disengages its carrying short shaft in the other direction. All such freewheels are in turn continuously and uni-directionally engaged to a common rotatable output gear which is caused to rotate through a simultaneous combination of the short shaft oscillations and their one way engagement/disengagement freewheel action. The central assembly is caused to oscillate either through gradually pivoting a rotating swash plate co-centrally mounted to and pressing against the oscillating central assembly through a thrust bearing or through gradually pivoting while rotatably displacing one pivotable and rotatably displacable yoke with respect to a second fixed and opposing yoke, wherein the yokes are connected to each other through the oscillating central assembly's short shafts.

The capability of the transmission to provide infinite and continuous increases or reductions in TORQUE with inversely corresponding increases or reductions in RPM is extremely desirable since it allows the selection of the exact TORQUE and RPM settings that may be required under any particular environment. This results in the most energy efficient transmission of power from the source to the load. At the same time, since the transmission described and claimed herein remains continuously engaged while shifting through the entire TORQUE and RPM range including the zero output RPM position, it totally eliminates the loss of power and/or momentum while down-shifting or up-shifting between gears which is inherent in today's manual and automatic gearboxes

Prior infinitely Variable Transmissions and continuously variable transmissions are generally of two types: "friction drive" transmissions and the "shaft oscillation" transmissions.

The "friction drive" transmissions rely mostly on conical pulleys and friction belts or cones with intermediate friction rollers, or toroidal discs with intervening friction rollers. All such devices are inherently "torque limited" and susceptible to unacceptable levels of wear and tear due to their reliance on friction.

The "shaft oscillation" transmissions rely on generating shaft oscillations generally through reciprocating or rotating cam followers oscillated by rotating cams. Such shaft oscillations rotate the output shafts through "one-way clutches" which engage when rotated in one direction and disengage when rotated in the opposite direction. Although such clutches are dependable, efficient and can sustain extremely heavy torque loads, the rotating or reciprocating cam followers together with their respective rotating cam arrangements disclosed thus far are too complex, are inefficient in that there are high friction losses associated with the multitude of moving parts, and are susceptible to very high wear and tear.

While the present invention may generally be considered to be of the "shaft oscillation" type, it overcomes the problems associated with prior art systems due to the inherent simplicity of its design, the total lack of cams and cam followers, and the fact that all moving parts and shafts rotate on ball bearings and/or thrust bearings throughout their entire range of motion.

The additional advantages offered by the invention over existing technology include, but are not limited to: exceptional torque amplification (from over 90 to 1 down to 1 to 1) with associated RPM ranges from source RPM down to zero; no need for input shaft disengaging clutch; improved fuel economy; improved acceleration; improved matching of power transmission from source to load; improved reliability through use of few moving parts; low manufacturing costs due to the simplicity of parts; very compact volume and low weight; and an extremely broad range of applications including *light vehicles, heavy trucks, earth moving equipment, racing cars, motorcycles, wind generators, conveyor belts, production line machinery, marine propulsion* units, etc.

### SUMMARY OF THE INVENTION

### SWASH PLATE ASSEMBLY EMBODIMENT

**Swash Plate Assembly** - In one of the preferred embodiments of the invention at least one "swash-plate assembly" is utilized preferably having an inner circular rotating portion, an outer non-rotating partially hollow portion and a thrust bearing retention ring. The inner circular rotating portion has a central hub that contains a slot running radially through its center and a centrally positioned yoke-type retaining pin housing where the two exposed ends of the input shaft's retaining pin are rotatably mounted. The inner circular rotating portion is pivotally and centrally fixed by way of such central retaining pin housing and retaining pin to the input shaft, which runs horizontally through the center of the radial slot of such inner circular rotating portion thereby forcing it to co-rotate with the input shaft while at the same time allowing it to pivot with respect to the input shaft at any angle from zero degrees to over 25 degrees with respect to the vertical axis. The outer circular non-rotating partially hollow portion, is mounted concentrically to the inner rotating portion by way of an intervening main thrust bearing such that the inner rotating portion is rotatably driven by the input shaft and can freely rotate within the outer non-rotating partially hollow portion, thus causing the outer non-rotating partially hollow portion to exactly follow any motion, other than the motion of rotation, induced upon it by the inner rotating portion as its angle of pivot with respect to the input shaft is varied from the vertical. The thrust bearing retention ring is bolted on to the outer non-rotating partially hollow portion and holds the inner rotating portion, the intervening main thrust bearing and the outer non-rotating partially hollow portion together as one assembly through an auxiliary thrust bearing positioned between the thrust bearing retention ring and the inner rotating portion. The entire swash plate assembly pivots around the central retaining pin attached to the input shaft such that the longitudinal axis of the central retaining pin lies in the same plane that runs radially through the exact center of the main thrust bearing.
   The outer non-rotating partially hollow portion of the swash plate assembly has four short radial shafts vertically fixed on its outer perimeter in a "cross pattern," each one of such four short radial shafts being positioned 90 degrees apart from its neighboring short shafts. The longitudinal axes of all four such short shafts lie on the same plane which plane in turn passes exactly through the point where the longitudinal axis of the central retaining pin of the swash plate assembly intersects with the longitudinal axis of the input shaft. Such four short shafts run in the north, south, east and west directions and are accordingly referred to as the "north", "south", "east", and "west" swash plate assembly short shafts.
**Outer Ring** - The entire swash plate assembly is perimetrically surrounded by an outer ring that is concentrically mounted to the swash plate assembly and which is pivotally coupled to the swash plate assembly through the "north" and "south" swash plate assembly short shafts through related bearings. The outer ring has two of its own main shafts protruding outwards and vertically fixed to its outer perimeter in the "east" and "west" positions with respect to the "north" and "south" swash plate assembly short shafts. These two outer ring main shafts are in turn pivotally mounted in bearings that are part of the main frame, which allows the outer ring to pivot with respect to the main frame around the "east-west" axis. Concentrically mounted on each of the two outer ring main shafts between the outer ring and the main frame is a "freewheel" (one-way clutch) that carries a toothed gear concentrically mounted on its outer perimeter. Both of the toothed gears mounted perimetrically on the two freewheels are in turn continuously engaged with one main output gear which directly and simultaneously meshes with both said outer ring freewheel gears. The main output gear rotates concentrically with the input shaft but at varying rotation speeds and is connected to the output shaft either directly or through reduction gears.
**Two Freewheel Swash Plate** - As the inner rotating portion of the swash plate assembly is forced to pivot with respect to the rotating input shaft, it causes the entire swash plate assembly to pivot with it. For example, as the angle of pivot of the swash plate assembly with respect to the rotating input shaft is varied from the vertical position (at zero degrees) to one degree, the rotation of the input shaft through 360 degrees forces the swash plate assembly's outer non-rotating partially hollow portion to which the four short shafts are perimetrically attached to oscillate around its "north-south" and "east-west" axes. As the swash plate assembly oscillates around the "east-west" axis it forces the outer ring to which it is attached through its "north" and "south" short shafts to also oscillate around its "east-west" axis. As the input shaft rotates by 360 degrees it will cause each of the outer ring's "east-west" main shafts to oscillate by 4 degrees (from minus 1 degree to zero to plus 1 degree and then back through zero to minus 1 degree). Accordingly each outer ring main shaft will engage its respective freewheel through 180 degrees of rotation of the input shaft and disengage its freewheel through the other 180 degrees of rotation of the input shaft. Since the two outer ring main shafts are opposed and their freewheels are equally opposed, when the freewheel of the east main shaft is engaged the freewheel of the west main shaft will be disengaged and vice-versa. Accordingly one freewheel will positively engage the main output gear through the first 180 degrees of rotation of the input shaft and the opposite freewheel will positively engage the main output gear through the other 180 degrees of rotation of the input shaft, thus producing rotary motion of the main output gear.
**The Spider** - The basic transmission motion having a two freewheel swash plate assembly configuration relies solely on the oscillation of the swash plate assembly over its "east-west" axis. However, the swash plate assembly also oscillates over its "north-south" axis. This oscillation is transferred to the main output gear through an assembly called the spider. The spider has two sets of double legs (each set being much like a yoke) set 90 degrees apart and connected to each other through a common hub. It effectively resembles two yokes one superimposed over the other and set 90 degrees out of phase with each other. The inner yoke of the spider is pivotally mounted through simple bearings to the "east-west" short shafts of the swash plate assembly while the outer yoke of the spider has two protruding main shafts vertically fixed at the end of each leg on its "north-south" axis, such that the center of such bearings and the longitudinal axis of such main shafts share the same plane. These two spider main shafts are in turn pivotally mounted in bearings that are set in the main frame, which allows the Spider to pivot with respect to the main frame around the "north-south" axis. Concentrically mounted on each of the two spider main shafts between the spider legs and the main frame is a freewheel (one way clutch) that carries a toothed gear concentrically mounted on its outer perimeter. Both of the two toothed gears mounted perimetrically on the two freewheels are in turn continuously engaged with the same main output gear which directly and simultaneously meshes with both said freewheel gears and the also with the two freewheel gears of the outer ring. The longitudinal axis of the two outer ring main shafts and the two spider main shafts all lie in one plane which is vertical to the input shaft and intersects the input shaft at the point of intersection of the longitudinal axes of the central retaining pin and the input shaft.
**Four Freewheel Swash Plate** - In order to produce a continuous rotary motion of the main output gear, the "north-south" oscillation of the swash plate assembly must also be utilized in addition to its "east-west" oscillation. Accordingly, as the swash plate assembly oscillates around the "north-south" axis, it forces the spider to which it is attached through its "east" and "west" short shafts to also oscillate about its "north-south" axis. Given an angle of pivot of 1 degree, as the input shaft rotates by 360 degrees, the spider's two "north-south" main shafts begin to oscillate by **4** degrees (from minus 1 degree to zero to plus 1 degree and then back through zero to minus 1 degree) thereby in turn intermittently engaging and disengaging each of their two freewheels every 180 degrees of rotation of the input shaft. Since the spider's two main shafts are opposed and their freewheels are equally opposed, when the freewheel of the north main shaft is engaged the freewheel of the south main shaft will be disengaged and vice-versa. Accordingly one freewheel will positively engage the main output gear through the first 180 degrees of rotation of the input shaft and the opposite freewheel will positively engage the main output gear through the other 180 degrees of rotation of the input shaft thus producing rotary motion of the main output gear. The combination of the positive main output gear intermittent engagement by the two "north-south" freewheels of the spider and the two "east- west" freewheels of the outer ring set 90 degrees out of phase with each other will cause the main output gear to rotate in a continuous and fluent motion at input shaft speeds equal to or in excess of 1,000 RPM, since each freewheel will positively engage the main output gear for only 90 degrees at a time (instead of 180 degrees) before its neighboring freewheel takes over by positively engaging the main output gear.
**Six Freewheel Swash Plate** - In this configuration the swash plate assembly oscillates around three axis set 60 degrees out of phase to each other instead of oscillating around two axes set 90 degrees out of phase to each other as in the "Two" and "Four" Freewheel Swash Plate examples described previously. The three axes can be described as the "east-west" or "0-180" degree axis; the "southeast-northwest" or "60-240" degree axis; and the "southwest-northeast" or "120-300" degree axis. This configuration includes one central swash plate assembly, two outer rings and two spiders.

The swash plate assembly has two pairs of opposed short shafts vertically embedded on its outer perimeter, where one pair of opposed short shafts is fixed at the "0" and "180" degree positions and is pivotally mounted to the "0" and "180" orifices of Ring(A) and the other pair of opposed short shafts is fixed at the "90" and "270" degree positions and is pivotally mounted to Spider(A)'s "90" and "270" degree leg orifices. Ring(A) has two pairs of opposed short shafts vertically embedded on its outer perimeter where one pair of opposed shafts is fixed at the "60" and "240" degree positions and is pivotally mounted to the "60" and "240" degree orifices of Ring(B) and the other pair of opposed shafts is fixed at the "150" and "330" degree positions and is pivotally mounted to Spider(B)'s "150" and "330" degree leg orifices. Ring(B), Spider(A) and Spider(B) each have one pair of protruding opposed main shafts vertically embedded on their outer perimeter/legs at the "120"/"300" "O"/"180" and "60"/"240" degree positions, respectively, which are in turn pivotally mounted in bearings set in the main frame, thus allowing Ring(B), Spider(A) and Spider(B) to freely pivot with respect to the main frame around their "120-300", "0-180" and "60-240" main axes respectively. Concentrically mounted on each of such main shafts between respectively Ring(B), Spider(A) and Spider(B) and the main frame is a freewheel (one way clutch) that carries a toothed gear concentrically mounted on its outer perimeter. All six such toothed freewheel gears are in turn continuously engaged with the main output gear which rotates concentrically with the input shaft but at varying rotation speeds and is in turn connected to the output shaft either directly or through reduction gears.
As the swash plate assembly is pivoted with respect to the rotating input shaft away from the vertical, it induces oscillation of Ring(B)'s "120-300" main shafts, Spider(A)'s "0-180" degree main shafts and Spider(B)'s "60-240" degree main shafts, which causes their attached freewheels to intermittently positively and uni-directionally engage the main output gear with which they all mesh so that the main output gear rotates in a continuous and fluent motion.

### DOUBLE YOKE ASSEMBLY EMBODIMENT DESCRIPTION

**Double Yoke Assembly** - In another embodiment of the invention, at least one double yoke assembly is utilized, preferably having a fixed yoke, a pivotable second yoke and a central cross assembly connecting the two opposed yokes to each other fork-to-fork. The fixed yoke has a central shaft which is rigidly mounted to the embodiment's rear frame such that it cannot either rotate or be rotatably displaced. The pivotable second yoke has an attached pivotable yoke shaft which cannot rotate but can be rotatably displaced through motions induced upon it, thereby causing it to oscillate on two axes (the "north-south" and "east-west" axes) with respect to the fixed yoke to which it is mounted fork-to-fork by way of the central cross assembly. The central cross assembly includes a central hollow hub having one pair of two opposed co-axial main shafts radially and rigidly mounted on its outer perimeter in the "north-south" axis, which are rotatably mounted through the fixed yoke's "north-south" axis orifices and whose shaft ends are rotatably housed in the embodiment's main frame in "north-south" alignment, and another pair of two coaxial opposing short shafts radially and rigidly mounted on its outer perimeter in the "east-west" axis, which are rotatably connected to the pivotable yoke's "south-east" axis orifices, all such main and short shafts being co-planar to each other such that their theoretical extensions intersect each other vertically at the same point as the hub's multi-directional center. Concentrically mounted on each of the two "north-south" main shafts between the fixed yoke's "north-south" fork ends and the main frame is a freewheel having a toothed gear concentrically mounted on its outer perimeter such that both freewheel gears are in turn continuously engaged with one main output gear that rotates concentrically with the axis of the central fixed yoke shaft and is preferably connected to the output shaft through a reduction gear.
**Rotating Grooved Disc Driven By Input Shaft** - A rotating grooved disc that is driven by the power source is rotatably mounted on the front frame and is connected with the pivotable second yoke's central shaft end through an arc shaped groove. The free end of the pivotable yoke shaft is slidably mounted in the arc shaped groove through a sliding shoe rotatably fitted to its end such that the pivotable yoke shaft can be smoothly displaced (shifted) throughout the length of the arc shaped groove from being perfectly aligned with the grooved disc's central shaft until it is over 30 degrees out of alignment with the shaft while the grooved disc is rotating. Such displacement (shifting) is achieved through an extension arm being either screwed-in or screwed-out through a hollow central section of the pivotable yoke shaft, thereby forcing a pivotable and rotatable sliding bogie attached to its end to slide radially in or out the straight grooved track of the grooved rotating disc that is aligned with and lies directly behind the arc shaped groove.
**Two Freewheel Double Yoke Arrangment** - The pivotable yoke is caused to oscillate around the "north-south" and "east-west" axes of the central cross assembly when the inclination angle of the pivotable yoke shaft with respect to the axis of rotation of the rotating grooved disc is varied from the horizontal position (zero degrees). The "east-west" oscillation of the pivotable yoke shaft causes the central cross assembly to which it is rotatably attached through the "east-west" short shafts to oscillate strictly and only around its "north-south" axis. Given an inclination angle of 1 degree, as the grooved disc rotates by 360 degrees it will cause the central cross assembly's "north-south" main shafts to oscillate by 4 degrees (from minus 1 degree to zero to plus 1 degree through zero to minus 1 degree). Since the two central cross assembly main shafts are opposed and their freewheels are equally opposed, one freewheel will positively engage the main output gear through the first 180 degrees of rotation of the grooved disc and the opposite freewheel will positively engage the main output gear through the other 180 degrees of rotation of the grooved disc thus producing rotary motion of the main output gear.
**The Oscillating Horse Shoe** - An assembly called the horse shoe transforms the pivotable yoke shaft's "north-south" oscillation to an "east-west" axial oscillation whose axis is co-planar to the central cross assembly's "north-south" main shaft axis, which it vertically intersects at the point of intersection of the central cross assembly's "north-south" and "east-west" shaft axes. The horse shoe is aligned in the "east-west" direction and includes a central hollow semi-circular section through which the pivotable yoke's shaft is slidably mounted such that it can oscillate within such hollow section though a 60 degree arc in the "east-west" direction. A pair of "east-west", opposed, protruding, co-axial main shafts are rigidly and vertically attached to the horse shoe's ends such that the ends of said two main shaft are rotatably housed in the embodiment's main frame in "east-west" alignment.
   The two main shafts of the central cross assembly and the two main shafts of the horse shoe are thus co-planar, their theoretical extensions vertically intersecting each other at a point co-incidental to the point of intersection of the central cross assembly's main "north-south" shafts and short "east-west" shafts. Concentrically mounted on each of the horse shoe's "east-west" main shafts between the horse shoe legs and the main frame is a freewheel that carries a toothed gear concentrically mounted on its outer perimeter such that both freewheel gears are in turn continuously engaged with the same main output gear to which are engaged the two freewheel gears attached to the central cross assembly's main "north-south" shafts.
**Four Freewheel Double Yoke Arrangement** - As the pivotable yoke shaft oscillates in the "north-south" direction it forces the horse shoe to which it is slidably attached to oscillate strictly around the "east-west" axis of its two main "east-west" shafts. Given an inclination angle of 1 degree, as the grooved disc rotates by 360 degrees it will cause the horse shoe's "east-west" main shafts to oscillate by 4 degrees (from minus 1 degree to zero to plus 1 degree back through zero minus 1 degree). Since the horse shoe's two main shafts are opposed and their freewheels are equally opposed one freewheel will positively engage the main output gear through the first 180 degrees of rotation of the grooved disc and the opposite freewheel will positively engage the main output gear through the other 180 degrees of rotation of the grooved disc. The combination of the intermittent engagement of the main output gear by the horse shoe's two "east-west" freewheel gears and the cross assembly's two "north-south" freewheel gears set 90 degrees out of phase with each other will cause the main output gear to rotate in a continuous and very fluent motion.

### BRIEF DESCRIPTION OF THE DRAWINGS

**Figures(1) through (8B)** relate to one preferred embodiment utilizing the Swash Plate Assembly.
**Figure (1)** is an *exploded view* of the swash plate assembly coupled to the outer ring and the spider including the input shaft and the parts associated with the shifting mechanism.
**Figure(1A)** is an *exploded view* of the input shaft assembly including some elements of the swash plate pivoting mechanism.
**Figure(1B)** is an *exploded view* of the back and front sides of the swash plate assembly's circular rotating portion.
**Figure(2)** is a schematic *side view* of the cross section of the entire assembled four freewheel single swash plate embodiment wherein the four freewheels are 90 degrees out of phase with each other and the applied swash plate inclination angle is set at zero degrees off the vertical.
**Figure(2A)** is a schematic *side view* of the cross section of the entire assembled four freewheel single swash plate embodiment having an applied swash plate inclination angle while the shifting linkage connecting the input shaft to the swash assembly's inner rotating portion is facing north.
**Figure(3)** is a schematic *top view* of the cross section of the swash plate and freewheel assembly of the four freewheel single swash plate embodiment with the applied swash plate inclination angle set at zero degrees off the vertical.
**Figure(3A)** is a schematic *top view* of the cross section of the swash plate and freewheel assembly of the four freewheel single swash plate embodiment having an applied swash plate inclination angle while the shifting linkage connecting the input shaft to the swash assembly's inner rotating portion is facing east.
**Figure(4)** is a schemati*c front view* of the cross section of the swash plate and freewheel assembly of the four freewheel single swash plate embodiment with the applied swash plate inclination angle set at zero degrees off the vertical.
**Figure(5)** is a schematic *front view* of the cross section of the swash plate and freewheel assembly of the two freewheel single swash plate embodiment with the applied swash plate inclination angle set at zero degrees off the vertical.
**Figure(5A)** is a schematic *side view* of the cross section of the swash plate and freewheel assembly of the two freewheel single swash plate embodiment with the applied swash plate inclination angle set at zero degrees off the vertical.
**Figure(6)** is a schematic *front view* of the cross section of the swash plate and freewheel assembly of the six freewheel single swash plate embodiment including two outer rings and two spiders with the applied swash plate inclination angle set at zero degrees off the vertical.
**Figure(7)** is a schematic *side view* of two opposed sets of the four freewheel swash plate assembly set 45 degrees out of phase with each other wherein the four freewheels of the left swash plate assembly set engage the left side of a common main output gear and the four freewheels of the right swash plate assembly set engage the right side of the common main output gear.
**Figure(7A)** is a schematic *side view* of the inner circular rotating portions of the swash plate assemblies of Figure(7) showing their 45 degree out of phase mounting to the common input shaft.
**Figure(7B)** is a schematic *front view* of the inner circular rotating portions of Figure(7A) showing their 45 degree out of phase mounting to the common input shaft.
**Figure(8)** is a schematic *side view* of two opposed sets of the two freewheel swash plate assembly set 90 degrees out of phase with each other wherein the two freewheels of the left swash plate assembly set engage the left side of a common main output gear and the two freewheels of the right swash plate assembly set engage the right side of the common main output gear.
**Figure(8A)** is a schematic *side view* of the inner circular rotating portions of the swash plate assemblies of Figure(8) showing their 90 degree out of phase mounting to the common input shaft.
**Figure(8B)** is a schematic *front view* of the inner circular rotating portions of Figure(8A) showing their 90 degree out of phase mounting to the common input shaft.
**Figures (9) through (18)** relate to one preferred embodiment utilizing the Double Yoke Assembly.
**Figure(9)** is a schematic *side view* of the entire "two freewheel" double yoke embodiment.
**Figures (10) and (10A)** depict the *side view* and *front view* respectively of the central cross assembly.
**Figures(11), (11A) and (11B)** depict the *front view* and two *side views* respectively of the rotating grooved disc driven by the input source.
**Figures(12), (12A), (12B) and (12C)** depict the *side view, side cross section(a), transverse cross section* and *side cross section(b)* respectively of the pivotable second yoke and yoke shaft.
**Figure(13)** depicts the *side cross* section of the pivotable second yoke's extension arm.
**Figures(14) and (14A)** depict the *front view* and the *side view* respectively of the pivotable and rotatable sliding bogie.
**Figures(15), (15A), (15B) and (15C)** depict the *side cross section, front view, rear view* and *top view* respectively of the oscillating horse shoe.
**Figure(16)** is a schematic *side view* of the entire "four freewheel" double yoke embodiment.
**Figure (17)** is a schematic frontal cross section of the four freewheel double yoke embodiment's common plane shared by the four main freewheel shafts.
**Figure (18)** is a schematic *side view* of the entire "eight freewheel" double yoke embodiment.

### DETAILED DESCRIPTION OF THE PREFERRED EMBODIMENTS

### Swash Plate Embodiment - [Figures (1) through (8B)]

**Swash Plate Assembly:** Referring to FIG. (1), there is shown one of the preferred embodiments of the invention utilizing a swash plate assembly. The swash plate assembly includes an inner circular rotating portion (3), a concentrically mounted outer non-rotating partially hollow portion (5), and a thrust bearing retention ring (1) which is perimetrically attached to the outer non-rotating portion (5) thereby rotatably sandwiching the main thrust bearing (4), the inner rotating portion (3) and the auxiliary thrust bearing (2) in that order between the outer non-rotating partially hollow portion (5) and its attached thrust bearing retention ring (1). Assembled items (1,2,3,4 and 5) shall hereinafter be collectively referred to as the "swash plate assembly".
   The inner rotating portion (3) has a central hub which contains a slot (46) running radically through its center and a centrally positioned yoke-type retaining pin housing (47) per FIG.(1B). The two exposed ends of the central retaining pin (44) of the input shaft (6) are rotatably mounted in the two opposed orifices (48) per FIG.(1B), thereby forcing the inner rotating portion (3) to co-rotate with the input shaft (6) while at the same time the inner rotating portion (3) may be pivoted with respect to the input shaft (6) at any angle from 0 degrees (vertical) to over 25 degrees from vertical with respect to the input shaft. The inner retaining portion (3) rotatably driven by the input shaft (6) can freely rotate within the outer non-rotating partially hollow portion (5) thus causing the outer non-rotating partially hollow portion (5) to exactly follow any motion, other than the motion of rotation, induced upon it by the inner rotating portion (3), as its angle of pivot with respect to the input shaft (6) is varied from the vertical. The entire swash plate assembly pivots around the central retaining pin (44) attached to the input shaft (6) such that the longitudinal axis of the central retaining pin (44) lies in the same plane that runs radially through the exact center of the main thrust bearing (4).
   The outer non-rotating partially hollow portion (5) of the swash plate assembly has two pairs of opposed short shafts (7,8,9 and 10) radially and vertically fixed on its outer perimeter in a cross pattern such that each of such four short shafts lies 90 degrees apart from its neighboring short shafts. The longitudinal axis (7-8) running "east-west" and the longitudinal axis (9-10) running "north-south" of each pair of such opposed short shafts share the same plane with each other and with the point where the longitudinal axis of the central retaining pin (44) intersects with the longitudinal axis of the input shaft (6).
**Pivot Mechanism:** The swash plate assembly can be pivoted with respect to the longitudinal axis of input shaft (6) while the input shaft is rotating. This is achieved through the linkage system consisting of the anchoring yoke (23) fixed to the swash plate assembly's inner rotating portion (3) through orifice (33) and pivotably connected to one end of lever arm (24) whose other end is pivotably connected to anchoring yoke (25) which is fixed to sliding carrier (26). Sliding carrier (26) is slidably mounted through its central orifice around input shaft (6) but is forced to co-rotate with input shaft (6) through a longitudinal recessed keyway machined in its central orifice which is aligned with a corresponding protruding rib (45) per FlG.(1A) longitudinally fixed on the surface of the input shaft (6) ninety degrees out of phase with respect to the axis of central retaining pin (44). A hollow rotatable flange (27) having two diametrically opposed orifices (28) and (29) is rotatably mounted on sliding carrier (26) and retained in place through the threaded end nut (30). Input shaft (6) is mounted through the front frame (60) per FlG.(2) of the embodiment by way of bearing (43) per FlG.(1A) which is rotatably fixed at its approximate mid-length point.
   Sliding carrier (26) with hollow rotatable flange (27) and end nut (30) are mounted on the internal section of input shaft (6) while rotatable carrier (34), which is rotatably and slidably mounted to the external section of input shaft (6), together with shifting lever (40) and shifting yoke (37, 38, 39) are mounted on the external section of input shaft (6). Hollow rotatable flange (27) of sliding carrier (26) is connected to rotatable carrier (34) through two parallel connector shafts (31) and (32) whose inward ends are fixed to orifices (28) and (29) of hollow rotatable flange (27) and whose outward ends are fixed to the two corresponding orifices (35) and (36) of rotatable carrier (34). Parallel connector shafts (31) and (32) are slidably mounted with respect to the embodiment's front frame (60) per FIG.(2) through orifices (61). Shifting lever (40) with its related shifting yoke (37, 38, 39) is rotatably attached through shaft (39) per FlG.(1) to bracket (62) per FlG.(2), which is mounted on frame (60). Shifting lever yoke legs (38) and (37) are slidably and rotatably mounted to carrier (34) through its two protruding pins (41) and (42). As shifting lever (40) is slidably displaced with respect to bracket (63) per FIG.(2), which is mounted on frame (60) it forces rotatable carrier (34) to slide in or out with respect to input shaft (6) in turn causing sliding carrier (26) to correspondingly slide in or out with respect to input shaft (6) while co-rotating with input shaft (6), thereby causing through the pivotable action of lever arm (24) the swash plate assembly's inner rotating portion (3) to pivot with respect to input shaft (6). The combination of rotation of input shaft (6) and the inducement of a pivot angle to inner rotating portion (3) with respect to input shaft (6) causes the swash plate assembly's outer non-rotating portion (5) to symmetrically and harmoniously oscillate about the "east-west" and "north-south" axes of its short shafts (7, 8, 9, 10).
**Outer Ring:** The entire swash plate assembly is perimetrically surrounded by an outer ring (13) that is concentrically and pivotally coupled to the swash plate assembly through short shafts (9) and (10) pivotally mounted to outer ring (13) through opposed orifices (12) and (11), respectively, which are aligned with the "north-south" axis. Outer ring (13) has two co-axial main shafts (14) and (15) protruding radially outward and vertically fixed to its outer perimeter in "east-west" axis alignment. The outer ring's main shafts (14) and (15) are pivotally mounted to the main frame of the embodiment in orifices (97) and (98) per FlG.(3), FlG.(3A) and FIG.(5) through related bearings, thus allowing outer ring (13) to pivot with respect to main frame (60) per FlG.(5) around the "east-west" axis. Concentrically mounted on each of the outer ring's two main shafts (14) and (15) between outer ring (13) and the main frame (60) are one way clutches freewheels (51) and (94) per FIG.(5), which carry toothed gears concentrically mounted on their outer perimeters. Freewheel gears (51) and (94) are continuously engaged with one main output gear (52) per FIG.(5). Examples of such freewheels are the Stieber Heidelberg Freewheels, types NF, NFS and NSS. Main output gear (52) per FIG.(2) is rotatably mounted within main frame (60) through main bearing (53) and thrust bearings (54) and (55) per FlG.(2) and rotates concentrically with input shaft (6) but at varying rotation speeds. Main output gear (52) is connected either directly to output shaft (58) or through meshing reduction gears (56) and (59) to output shaft (99) per FIG.(2). Main output gear's main bearing (53) and thrust bearings (54) and (55) are held in place through a set of three retention rings (57) per FIG.(2).
**Two Freewheel Swash Plate:** As inner rotating portion (3) of the swash plate assembly is forced to pivot with respect to input shaft (6), it causes the entire swash plate assembly to pivot with it as depicted in FlG.(2A), which is a "side view" and FlG.(3A) which is a "top view" of the swash plate embodiment. As input shaft (6) begins to rotate while inner rotating portion (3) is pivoted the entire swash plate assembly begins to oscillate about its "east-west" and "north-south" axes.
   The swash plate assembly's oscillation about its "east-west" axis will cause outer ring (13) through its "north-south" coupling with the swash plate assembly to also oscillate about its "east-west" axis, thereby causing the outer ring's two main shafts (14) and (15) to also oscillate about their "east-west" axis. Referring to FlG.(5) and FlG.(5A), both of which depict an embodiment having two freewheels per swash plate assembly, as input shaft (6) rotates by 360 degrees with an applied pivot angle of 1 degree of inner rotatable portion (3), such rotation will cause each of outer ring's opposed main shafts (14) and (15) to oscillate by 4 degrees (from minus 1 degree to zero to plus 1 degree back through zero to minus 1 degree). Accordingly, each outer ring main shaft (14) and (15) will engage its respective freewheel (51) and (94) through 180 degrees of rotation of input shaft (6) and disengage its respective freewheel (51) and (94) through the other 180 degrees of rotation of input shaft (6). Since two main shafts (14) and (15) are diametrically opposed and their freewheels (51) and (94) are equally diametrically opposed, when freewheel (51) is engaged freewheel (94) will be disengaged and vice-versa. Accordingly, freewheels (51) and (94) will intermittently engage main output gear (52) through 180 degrees of rotation and intermittently disengage main output gear (52) through the other 180 degrees of rotation of input shaft (6), thus producing rotary motion of the main output gear (52).
**Spider:** The swash plate assembly's oscillation about its "north-south" axis is converted to rotary motion of main output gear (52) through the "spider," which consists of inner yoke (16), outer yoke (20) and common hub (19) per FlG.(1). Inner yoke (16) and outer yoke (20) are mounted to common hub (19) 90 degrees out of phase to each other. Inner yoke (16) is pivotally mounted through orifices (17) and (18) to "east-west" short shafts (7) and (8) of outer non-rotatable portion (5). Outer yoke (20) has two protruding co-planar main shafts (21) and (22) fixed at the end of each leg and aligned with the "north-south" axis such that the center of orifices (17) and (18) and the longitudinal axis of co-planar main shafts (21) and (22) share the same plane. The spider's main shafts (21) and (22) are pivotally mounted to the embodiment's main frame (60) in orifices (95) and (96) per FIG.(2) and FlG.(4) through related bearings, thus allowing the spider to pivot with respect to main frame (60) per FlG.(2) around the "north-south" axis. Concentrically mounted on each of the spider's two main shafts (21) and (22) between outer yoke (20) and the main frame (60) are freewheels (49) and (50) per FlG.(4) which carry toothed gears concentrically mounted on their outer perimeters. Freewheel gears (49) and (50) are continuously engaged with main output gear (52) per FlG.(4).
**Four Freewheel Swash Plate:** As the swash plate assembly oscillates around the "north-south" axis, it forces the spider to which it is attached through inner yoke orifices (17) and (18) to also oscillate around its "north-south" axis. As input shaft (6) rotates by 360 degrees with an applied pivot angle of 1 degree of inner rotatable portion (3), such rotation will cause each of the spider's main shafts (21) and (22) to oscillate from minus 1 degree through plus 1 degree back to minus 1 degree, thereby engaging their respective freewheels (49) and (50) through 180 degrees of rotation of input shaft (6) and disengaging their respective freewheels (49) and (50) through the other 180 degrees of rotation of input shaft (6). The combination of the positive intermittent engagement of main output gear (52) by freewheels (49) and (50) of the spider and freewheels (51) and (94) of outer ring (13) set 90 degrees out of phase with each other will cause main output gear (52) to rotate in a continuous and fluent motion at input shaft (6) speeds equal to or in excess of 1,000 RPM, each freewheel positively engaging main output gear (52) only every 90 degrees (instead of 180 degrees) before its neighboring freewheel positively engages main output gear (52).
**Six Freewheel Swash Plate:** In this configuration, the swash plate assembly oscillates around three axis set 60 degrees out of phase to each other instead of oscillating around two axis set 90 degrees out of phase to each other as in the "Two" and "Four" Freewheel Swash Plate embodiments described previously. The three axes can be described as the "east-west" or "0-180" degree axis; the "southeast-northwest" or "60-240" degree axis and the "southwest-northeast" or "120-300" degree axis. This configuration includes one central swash plate assembly (shaded area), two outer rings (71) and (73) and two spiders (70) and (72) per FlG.(6).
   Referring to FIG.(6) the swash plate assembly (shaded area) has two pairs of opposed short shafts (74-75) and (76-77) vertically embedded on its outer perimeter, where pair (74-75) is fixed at the "0" and "180" degree positions and is pivotally mounted to the "0" and "180" orifices of inner ring (71) and pair (76-77) is fixed at the "90" and "270" degree positions and is pivotally mounted to the "90" and "270" degree leg orifices of inner spider (72). Inner ring (71) has two pairs of opposed short shafts (80-81) and (82-83) vertically embedded on its outer perimeter where pair (82-83) is fixed at the "60" and "240" degree positions and is pivotally mounted to the "60" and "240" degree orifices of outer ring (73) and pair (80-81) is fixed at the "150" and "330" degree positions and is pivotally mounted to the "150" and "330" degree leg orifices of outer spider (70). Outer ring (73), inner spider (72) and outer spider (70) each have one pair of protruding opposed main shafts (86-87), (78-79) and (84-85) respectively, which are vertically embedded on their outer perimeter/legs at the "120"/"300", "0"/"180" and "60"/"240" degree positions, respectively which are in turn pivotally mounted in bearings set in the main frame, thus allowing outer ring (70), inner spider (72) and outer spider (70) to freely pivot with respect to the main frame around their "120-300", "0-180" and "60-240" main axes, respectively. Concentrically mounted on each of such main shafts (86),(87),(78),(79),(84) and (85) between outer ring (70), inner spider (72), outer spider (70) and the main frame are freewheels (66),(67),(69),(68),(64) and (65), respectively each of which carries a toothed gear concentrically mounted on its outer perimeter. Freewheel gears (66),(67),(69),(68),(64) and (65), are in turn continuously engaged with a common main output gear which rotates concentrically with the input shaft but at varying rotation speeds and is in turn connected to the output shaft either directly or through reduction gears.
   As the swash plate assembly is pivoted with respect to the rotating input shaft (6) away from the vertical, oscillation of outer ring's main shafts (86) and (87), inner spider's main shafts (78) and (79) and outer spider's main shafts (84) and (85) is induced which causes their attached freewheels (66)-(67), (69)-(68) and (64-65) to intermittently positively and uni-directionally engage the common main output gear with which they all mesh, so that the main output gear rotates in a continuous and fluent motion.
**Multiple Swash Plate Arrangements:** The two, four and six freewheel swash plates and various combinations thereof can be employed in order to meet specific requirements. Generally, the two and four freewheel swash plates described previously can accept pivot angles with respect to the rotating input shaft of up to about 15 degrees while the six freewheel swash plate described previously can accept higher pivot angles, thus allowing for a wider range of RPM ratios and TORQUE amplification factors.
   Referring to FIG.(7), FIG.(7A) and FIG.(7b), two sets of four freewheel swash plate assemblies (89) and (90) can be co-axially but not co-rotatably placed each on either side of a double faced main output gear (88) driving an output shaft (91) such that the "north-south" freewheels of set (89) are positioned on the north-south "0-180" degree axis and the "north-south" freewheels of set (90) are positioned on the northeast-southwest "45-225" degree axis per FIG.(7B), thus being 45 degrees out of phase with each other. This arrangement offers an extremely smooth output gear rotation down to an input shaft rotation of below 500 RPM.
   Referring to FIG.(8), FIG.(8A) and FIG.(8B), two sets of the two freewheel swash plate assemblies (92) and (93) can be co-axially but not co-rotatably placed each on either side of a double faced main output gear such that the "north-south" freewheels of set (92) are positioned on the "north-south" "0-180" degree axis and the "north-south" freewheels of set (93) are positioned on the "east-west" "90-180" degree axis per FIG.(8B) thus being 90 degrees out of phase with each other. This arrangement offers the same output gear rotation smoothness as a single four freewheel swash plate assembly but without the use of spiders.
   Two sets of six freewheel swash plate assemblies can be co-axially but not co- rotatably placed each on either side of a double faced main output gear such that the "north-south" freewheels of the right set are positioned on the north-south "0-180" degree axis and the "north-south" freewheels of the left set are positioned on the northeast-southwest "30-210" degree axis thus being 30 degrees out of phase with each other. This arrangement offers an extremely smooth output gear rotation down to an input shaft rotation of well below 500 RPM and an expanded range of ratios from a bottom end of as low as (3 to 1] to a high end of as high as (90 to 1].
   Swash plate arrangements having more than six freewheels each engaging one or more main output gears can be utilized to meet any extraordinary or other application requirements.

### Double Yoke Embodiment - [Figures (9) through (18)]

**Double Yoke Assembly:** Referring to FIG.(9), there is shown another of the preferred embodiments of the invention utilizing a double yoke assembly wherein at least one double yoke assembly is utilized preferably having a fixed yoke (101), a pivotable second yoke (102) and a central cross assembly (103) connecting the two opposed yokes (101) and (102) to each other "fork to fork". The fixed yoke (101) has a central shaft which is rigidly mounted to the embodiment's rear frame (120) at position (121) thereby not allowing it to either rotate or be rotatably displaced. The pivotable second yoke (102) has an attached pivotable yoke shaft which cannot rotate but can be rotatably displaced through motions induced upon it, thereby causing it to oscillate about two axes (the "north-south" and "east-west" axes) with respect to the fixed yoke (101) to which it is mounted fork to fork by way of the central cross assembly (103). The central cross assembly (103) includes a central hollow hub (103) having one pair of two opposed coaxial main shafts (111) and (112) per FIG.(10) and (10A) radially and rigidly mounted on its outer perimeter in the "north-south" axis, which are rotatably mounted through the "north-south" axis orifices of the fixed yoke (101) and whose shaft ends (111) and (112) are rotatably housed in the embodiment's main frame (120) in "north-south" alignment and another pair of two co-axial opposing short shafts (122) and (123) per FIG.(10A) radially and rigidly mounted on its outer perimeter in the "east-west" axis, which are rotatably connected to the "east-west" axis of the pivotable yoke orifices (128) and (129) respectively per FIG.(12A) and (12B), wherein main shafts (111) and (112) and short shafts (122) and (123) are co-planar to each other such that their theoretical extensions intersect each other vertically at the same point as the hub's (103) multi-directional center. Concentrically mounted on each of main shafts (111) and (112) between the "north-south" fork ends of fixed yoke (101) and main frame (120) are freewheels (116) and (117), each having a toothed gear concentrically mounted on its outer perimeter such that both freewheel gears (116) and (117) are in turn continuously engaged with main output gear (113) which rotates concentrically with the axis of the central fixed yoke shaft (101) and is preferably connected to the output shaft (114) through a reduction gear (115).
**Rotating Grooved Disc Driven By Input Shaft:** Rotating grooved disc (104), which is driven by the power source through input shaft (107) and reduction gear (108), is rotatably mounted on the front frame (120) and is connected with the pivotable second yoke's central shaft end (102) through an arc-shaped groove (105) as set out in detail in FIG.(11), (11A) and (11B). The free end of the pivotable yoke shaft (102) is slidably mounted in the arc-shaped groove (105) through sliding shoe (109) rotatably fitted to its end such that the pivotable yoke shaft (102) can be smoothly displaced (shifted) throughout the length of the arc shaped grove (105) from a position where it is perfectly aligned with the grooved disc's central shaft (119) until it is over 30 degrees out of alignment with the shaft while grooved disc (104) is rotating.
**Pivot Arrangement of Pivotable Yoke Shaft:** Concentrically and threadably mounted to hollow sections (130) and (131) of pivotable yoke shaft (102) per FIG.(12), (12A), (12B), (12C) and FIG.(13) is yoke shaft extension arm (124), the free end of which is in turn attached to pivotable and rotatable sliding bogie (110) per FlG.(14) and (14A), The bogie (110) is slidably mounted in straight bogie track (106) of rotating grooved disc (104). As yoke shaft extension arm (124) is rotated by first rotatable shifting shaft (118) and its attachments per FlG.(9) and FIG.(12) it is either screwed-in or screwed out with respect to the pivotable yoke shaft (102) thereby causing yoke shaft extension arm (124) to extend outwards or inwards from the free end of pivotable yoke shaft (102). This in turn forces sliding bogie (110) radially outward or inward within straight bogie track (106) of rotating grooved disc (104), thus displacing pivotable yoke shaft (102) out of alignment and, respectively, back into alignment, with respect to the axis of rotation of the rotating grooved disc's shaft (119). The means of rotation of yoke shaft extension arm (124) are provided by a first rotatable shifting shaft (118) which passes through the hollow center of fixed yoke shaft (101) and is in turn attached to small universal joint (148) which passes through the hollow center of cross assembly hub (103). The center of pivot of small universal joint (148) is perfectly aligned with the point of intersection of the axes of main "north-south" shafts (111) and (112) and short "east-west" shafts (122) and (123). Small universal joint (148) is further attached to a second rotatable shifting shaft (149) which passes through hollow center (132) of the pivotable yoke shaft (102) such that the free ribbed "male end" of second shifting shaft (149) is slidably mounted in a central hollow ribbed recess "female end" running through the threaded section (150) of pivotable yoke shaft extension arm (124).
**Two Freewheel Double Yoke Arrangement:** Pivotable yoke (102) is caused to oscillate around the "north-south" and "east-west" axes of central cross assembly (103) when the inclination angle of pivotable yoke shaft (102) with respect to the axis of rotation of rotating grooved disc (104) is varied from the (zero degree) horizontal position. The "east-west" oscillation of pivotable yoke shaft (102) causes central cross assembly (103) to which it is rotatably attached through "east-west" short shafts (122) and (123) to oscillate strictly and only around its "north-south" axis.
   Given an inclination angle of 1 degree, as grooved disc (104) rotates by 360 degrees it will cause the central cross assembly's "north-south" main shafts (111) and (112) to oscillate by 4 degrees (from minus 1 degree through plus 1 degree back to minus 1 degree). Since main shafts (111) and (112) are opposed and their freewheels (116) and (117), respectively, are equally opposed, one freewheel will positively engage main output gear (113) through the first 180 degrees of rotation of grooved disc (104) and the opposite freewheel will positively engage main output gear (113) through the other 180 degrees of rotation of grooved disc (104) thus producing rotary motion of the main output gear (113).
**The Oscillating Horse Shoe**: Horse shoe (125) per FIG.(15), (15A),(15B) and (15C) transforms pivotable yoke shaft's (102) "north-south" oscillation to an "east-west" axial oscillation whose axis is co-planar to the central cross assembly's (103) "north-south" main shaft axis which it vertically intersects at the point of intersection of the central cross assembly's "north-south" and "east-west" shaft axes. Horse shoe (125) is aligned in the "east-west" direction with respect to embodiment frame (120) when viewed from the front and includes a central hollow semi-circular section (134) through which pivotable yoke shaft (102) is slidably mounted through rollers (133) per FlG.(12A),(12B) and (12C), which are fitted on either of its sides such that pivotable yoke shaft (102) can oscillate within hollow section (134) though a 60 degree arc in the "east-west" direction with respect to frame (120). A pair of "east-west", opposed, protruding, co-axial main shafts (126) and (127) are rigidly and vertically attached to the ends of horse shoe (125) such that the ends of main shafts (126) and (127) are rotatably housed in main frame (120) in "east-west" alignment when viewed from the front. Central cross assembly main shafts (111) and (112) and horse shoe main shafts (126) and (127) share the same plane with each other, their theoretical extensions vertically intersecting each other at a point co-incidental to the point of intersection of main "north-south" shafts (111) and (112) and short "east-west" shafts (122) and (123) of central cross assembly (103).
   Concentrically mounted on each horse shoe "east-west" main shaft (126) and (127) between horse shoe legs (125) and main frame (120) are freewheels (135) and (136) per FIG.(16) and FIG.(17) each of which carries a toothed gear concentrically mounted on its outer perimeter such that freewheel gears (135) and (136) are in turn continuously engaged with the same main output gear (113) to which freewheel gears (116) and (117) are also engaged.
**Four Freewheel Double Yoke Arrangement** - As pivotable yoke shaft (102) oscillates in the "north-south" axis, it forces horse shoe (125) to which it is slidably attached to oscillate strictly around the "east-west" axis of its two main "east-west" shafts (126) and (127). Given an inclination angle of 1 degree, as grooved disc (104) rotates by 360 degrees it causes "east-west" main shafts (126) and (127) to oscillate by 4 degrees (from minus 1 degree through plus 1 degree back to minus 1 degree). Since main "east-west" shafts (126) and (127) are opposed and their freewheels (135) and (136) are equally opposed, one freewheel will positively engage main output gear (113) through the first 180 degrees of rotation of grooved disc (104) and the opposite freewheel will positively engage main output gear (113) through the other 180 degrees of rotation of grooved disc (104). The combination of the intermittent engagement of main output gear (113) by main "east-west" freewheel gears (135) and (136) and main "north-south" freewheel gears (116) and (117) set 90 degrees out of phase with each other will cause main output gear (113) to rotate in a continuous and very fluent motion.

### Multiple Double Yoke Arrangements

The geometry of the two and four freewheel double yoke embodiments provides for very high deflection angles of pivotable yoke shaft (102) with respect to the rotation axis of rotating grooved disc (104). Generally, such deflection angles can easily exceed 30 degrees thus, allowing for a very wide range of RPM ratios and TORQUE amplification factors from a high end of over 90 to 1 to a low end of below 3 to 1. In one embodiment, two sets of the two freewheel double yoke assemblies can be co-axially but not co-rotatably placed each on either side of a double faced main output gear such that the central cross assembly freewheels of the right set are positioned on the "north-south" axis when viewed from the front and the central cross assembly freewheels of the left set are positioned on the "east-west" axis, respectively, thus being 90 degrees out of phase with each other. This arrangement offers the same output gear rotation smoothness as a single four freewheel double yoke assembly but without the use of the oscillating horse shoe.
Referring to FIG. (18), two sets of the four freewheel double yoke assembly are coaxially but not co-rotatably placed each on either side of double faced main output gear (137) such that the central cross assembly "north-south" freewheels (116) and (117) of the right set are positioned on the north-south "0-180" degree axis when viewed from the front and the central cross assembly "north- south" freewheels (138) and (139) of the left set are positioned on the northeast-southwest "45-225" degree axis of the embodiment when viewed from the front, thus being 45 degrees out of phase with each other. The left four freewheel double yoke assembly consists of four freewheels (138), (139-not shown), (140) and (141 - not shown), a common output shaft (143) with its reduction gear (142), a common input shaft (144), a pivotable yoke (145), a grooved disc (146) and a fixed yoke (147) in mirror image of the right four freewheel double yoke assembly. Pivotable yokes (102) and (145) deflect outwards within their corresponding grooved disc straight bogie tracks in absolute unison and in a diametrically opposed fashion in order to enhance balancing generally. This arrangement offers an extremely smooth output gear rotation down to an input shaft rotation of well below 500 RPM.
Arrangements using more than two sets of double yoke embodiments (each equipped with two or four freewheels) engaging one or more main output gears can be utilized to meet any extraordinary or special application requirements.

### TRANSMISSION LEVERAGE & ROTATIONAL MOTION ANALYSIS

For a given input shaft RPM and TORQUE setting, and regardless of the configuration employed (two, four or six freewheel swash plates or two or four freewheel double yoke embodiments or multiple sets thereof), every specific pivot angle setting (for swash plate embodiments) and every specific shaft deflection angle setting (for double yoke embodiments) will result in one and only one output TORQUE and RPM setting provided that all of the freewheels have identical perimeters (teeth) to each other, are engaged to one or more main output gears having identical perimeters (teeth) to each other and that all pivot/deflection angles of the swash/plates double yokes involved (if more than one) are identical.
For example, given a two freewheel swash plate or a two freewheel double yoke embodiment (where each freewheel is 180 degrees out of phase to the other) set at a pivot/deflection angle of (1) degree with respect to the input shaft/grooved disc shaft: for every (360) degrees of rotation of the input shaft/grooved disc each freewheel's main concentric shaft will oscillate through a total of (4) degrees and will cause its respective freewheel to provide 2 degrees of positive engagement to the main output gear (where the Freewheel will cause the main output gear to rotate) and 2 degrees of disengagement (where the main output gear will cause the freewheel to rotate) since each freewheel carrying main shaft will oscillate from (-1) degree through (0) degrees to (+1) degree for the first 180 degrees of rotation of the input shaft/grooved disc and then from (+1) degree back through (0) degrees to (-1) degree for the second 180 degrees of rotation of the input shaft/grooved disc. Thus, for (1) degree of pivot/deflection each freewheel will positively engage the main output gear through (2) degrees and disengage for another (2) degrees (since both freewheels continuously and directly mesh with the main output gear but are opposite each other) thus in fact rotating (4) degrees around its main concentric shaft for every 360 degrees of rotation of the input shaft/grooved disc. This effectively provides a ratio of input shaft/grooved disc RPM to freewheel RPM of (360) degrees to (4) degrees or (90 to 1) and a multiplication of freewheel TORQUE with respect to input shaft/grooved disc TORQUE by a factor of (90).
Correspondingly: (2) degrees of pivot/deflection angle will provide input shaft/grooved disc to output shaft RPM ratios of (45 to 1) and a multiplication of freewheel TORQUE with respect to input shaft/grooved disc TORQUE by a factor of (45), and (22.5) degrees of pivot/deflection angle will provide input shaft/grooved disc to output shaft RPM ratios of (4 to 1) and a multiplication of freewheel TORQUE with respect to input shaft/grooved disc TORQUE by a factor of (4).

The invention's effect on RPM ratios and TORQUE amplification factors between the input shaft/grooved disc and the freewheels is summarized in Table A below:

**TABLE A**

| pivot angle or deflection angle | RPM ratio of in shaft/Disc to freewheel | Torque increase factor | pivot angle or deflection angle | RPM ratio of in shaft/Disc to freewheel | Torque increase factor |
|---|---|---|---|---|---|
| 1 | 90.00 to 1 | 9.00 | 16 | 5.63 to 1 | 5.63 |
| 2 | 45.00 to 1 | 45.00 | 17 | 5.29 to 1 | 5.29 |
| 3 | 30.00 to 1 | 30.00 | 18 | 5.00 to 1 | 5.00 |
| 4 | 22.50 to 1 | 22.50 | 19 | 4.74 to 1 | 4.74 |
| 5 | 18.00 to 1 | 18.00 | 20 | 4.50 to 1 | 4.50 |
| 6 | 15.00 to 1 | 15.00 | 21 | 4.29 to 1 | 4.29 |
| 7 | 12.86 to 1 | 12.86 | 22 | 4.09 to 1 | 4.09 |
| 8 | 11.25 to 1 | 11.25 | 23 | 3.91 to 1 | 3.91 |
| 9 | 10.00 to 1 | 10.00 | 24 | 3.75 to 1 | 3.75 |
| 10 | 9.00 to 1 | 9.00 | 25 | 3.60 to 1 | 3.60 |
| 11 | 8.18 to 1 | 8.18 | 26 | 3.46 to 1 | 3.46 |
| 12 | 7.50 to 1 | 7.50 | 27 | 3.33 to 1 | 3.33 |
| 13 | 6.92 to 1 | 6.92 | 28 | 3.21 to 1 | 3.21 |
| 14 | 6.43 to 1 | 6.43 | 29 | 3.10 to 1 | 3.10 |
| 15 | 6.00 to 1 | 6.00 | 30 | 3.00 to 1 | 3.00 |

At swash plate pivot angles or double yoke deflection angles below 1/2 of one degree the freewheels begin to cease positively engaging the main output gear and, thus, even though the input shaft/grooved disc continues to rotate the freewheels will effectively stop rotating and the main output gear to which they are engaged will also stop rotating. In effect all transmission of the input shaft/grooved disc rotation ceases and the swash plate/double yoke embodiments act like an input source RPM disengaging clutch.

Once the pivot/deflection angle starts positively engaging the freewheels at say 1/2 of one degree the invented transmission's freewheels provide their highest TORQUE amplification of the input source TORQUE and correspondingly their lowest output RPM with respect to the input source RPM.

Furthermore, in configurations employing multiple pairs of freewheels engaged to the same main output gear (but out of phase to each other), each freewheel positively engages the main output gear only when the main concentric shaft to which it is mounted oscillates in such positive direction faster than any other main concentric freewheel shaft at that given time and disengage its main concentric shaft at all other times.

Thus all additional freewheels (over and above the basic two opposed freewheels of any embodiment) provide a **supportive** effect to one another and not a cumulative effect.

Thus in the case of a single "four freewheel swash plate/double yoke embodiment," each freewheel will positively engage the main output gear through only 90 degrees before its neighboring freewheel begins to engage the main output gear due to the faster rate of rotation of its concentric main carrying shaft.

Correspondingly, in an embodiment involving two "four freewheel awash plate/double yoke embodiments" engaged to the left and right of a double faced (toothed) main output gear and 45 degrees out of phase to each other, each of the eight freewheels will engage the main output gear through only 45 degrees before its neighboring freewheel begins to engage the main output gear due to the faster rate of rotation of its concentric main carrying shaft. This will result in a perfectly smooth and fluent rotation speed of the main output gear at 500 input shaft RPM or even lower.

Since the angle of pivot/deflection of the swash plate/double yoke embodiment can be varied infinitely within the range between 0 degrees and over 30 degrees so too will the transmission's RPM ratios and TORQUE amplification factors vary infinitely within the range of over 90 to 1 down to below 3 to 1.

Furthermore, the transmission system of the present invention remains continuously engaged throughout the entire shifting process. This means that since there are no neutral spots in the shifting process (excepting only when the transmission acts like a clutch at the (0) degree pivot/deflection angle setting) there can be no loss of momentum whatsoever while upshifting or downshifting.

In conclusion, the invention provides for an infinitely and continuously variable transmission system which is very compact, has very few and simple-to-engineer moving parts, has very low friction losses with correspondingly low wear and tear, requires no input shaft disengaging clutch, provides infinite TORQUE and RPM ratios within a range starting from over (90 to 1) down to below (3 to 1) while at the same time it is able to deliver very high TORQUE throughputs without any slippage whatsoever.

The preferred embodiments of the present invention having been described, it will be appreciated by those of ordinary skill in the art that there can be departure from the details set forth herein without departing from the true nature and scope of the invention.

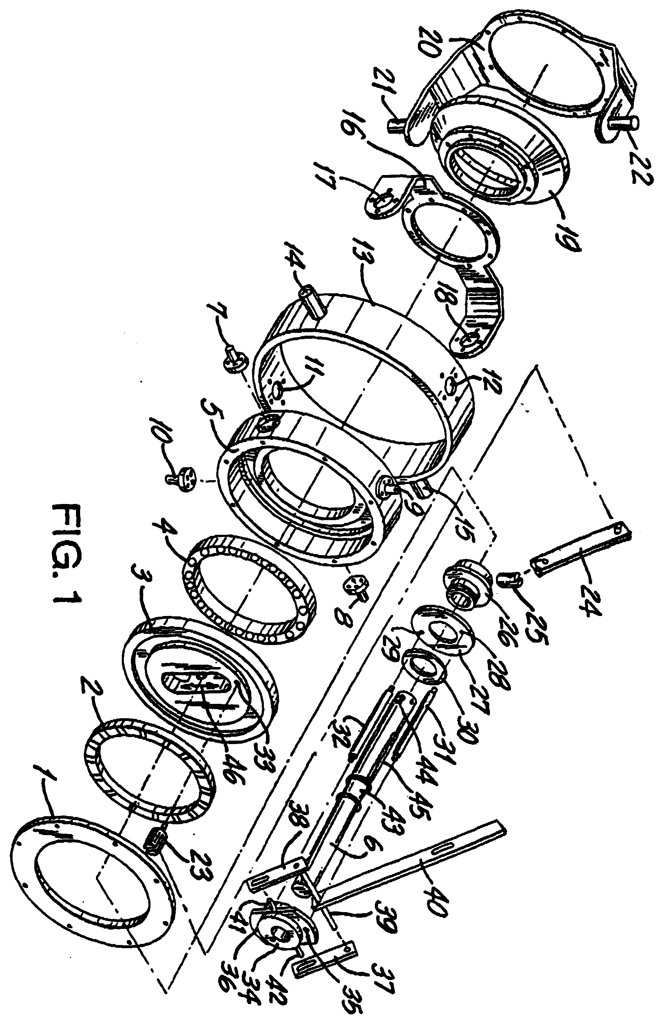

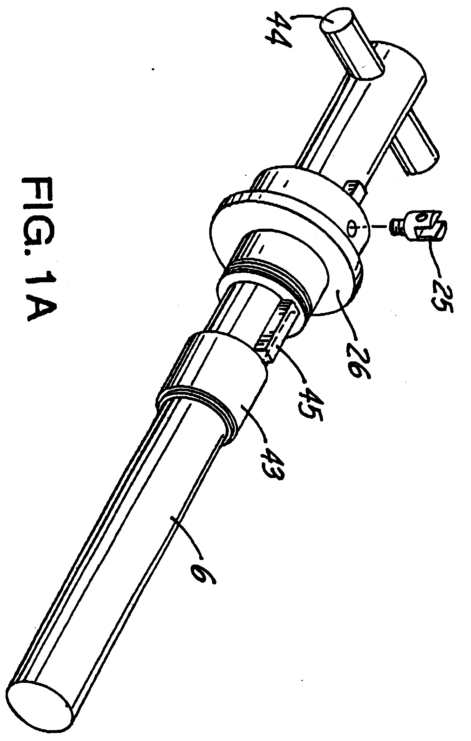

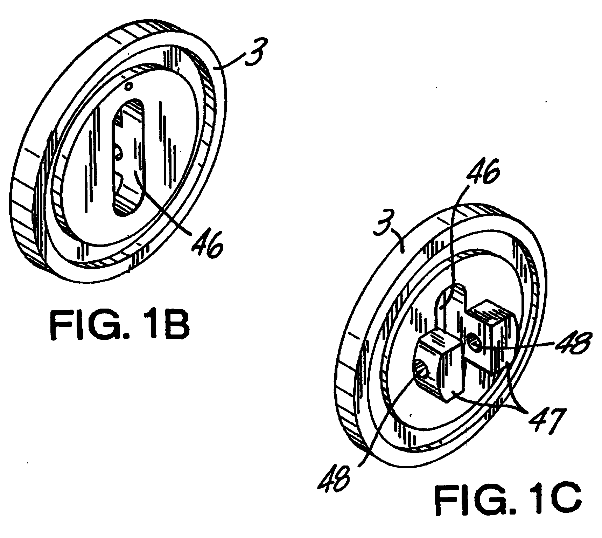

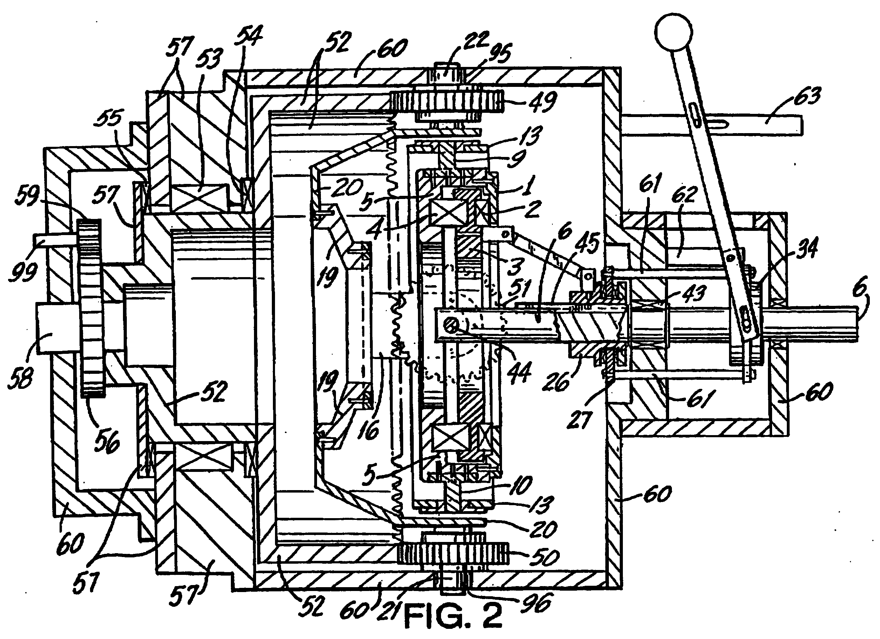

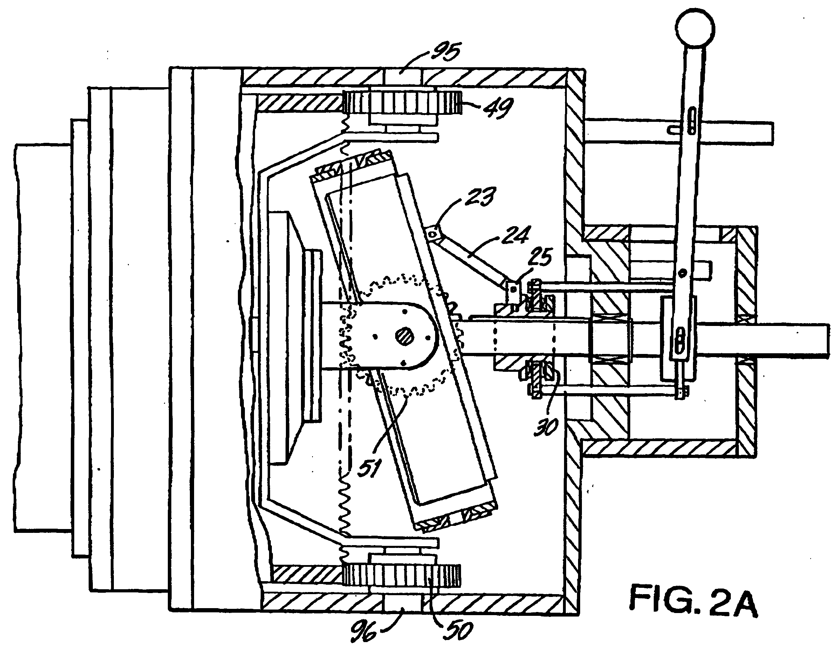

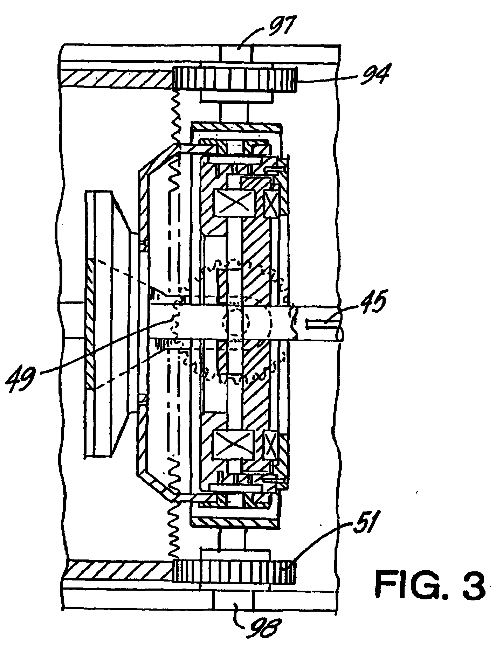

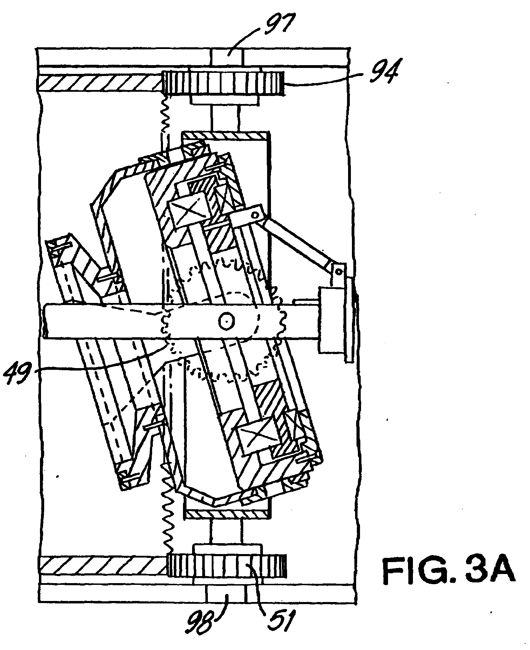

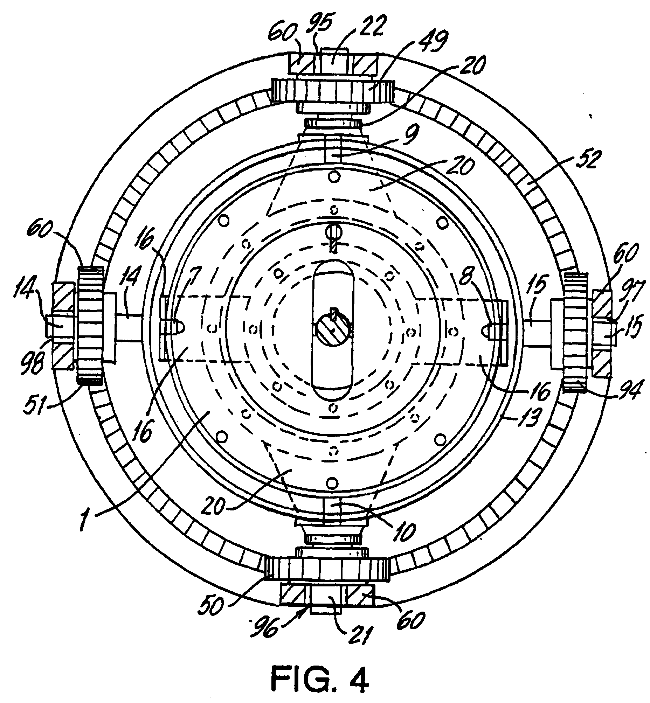

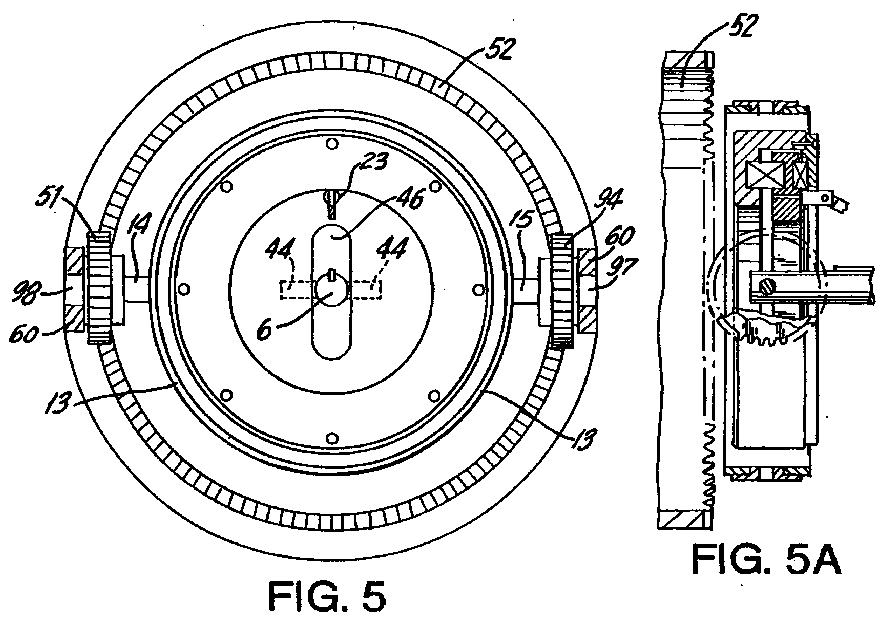

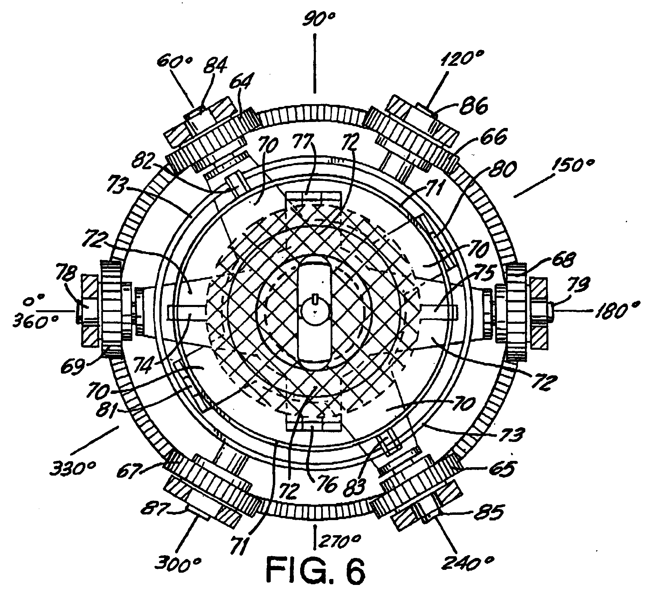

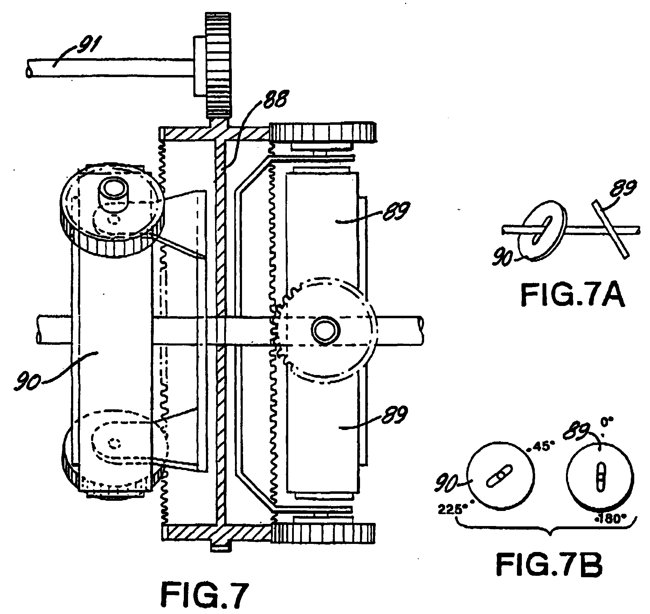

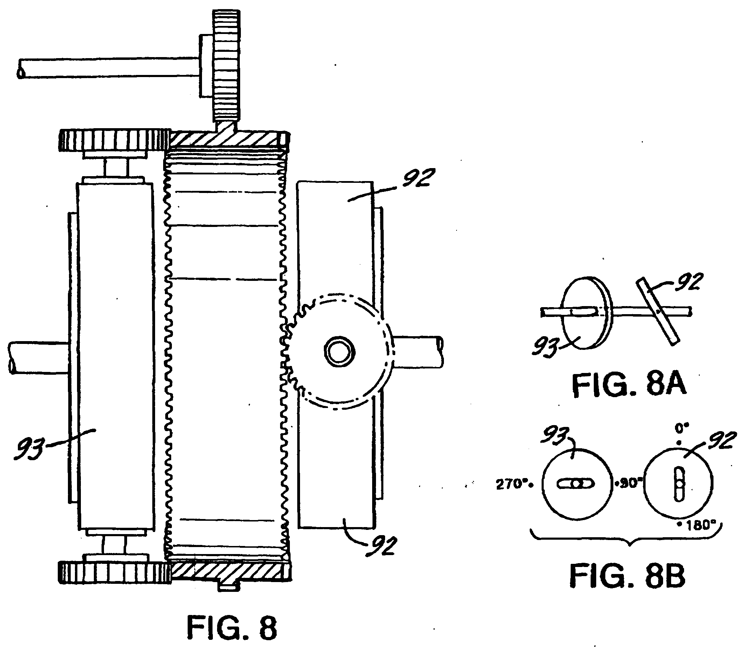

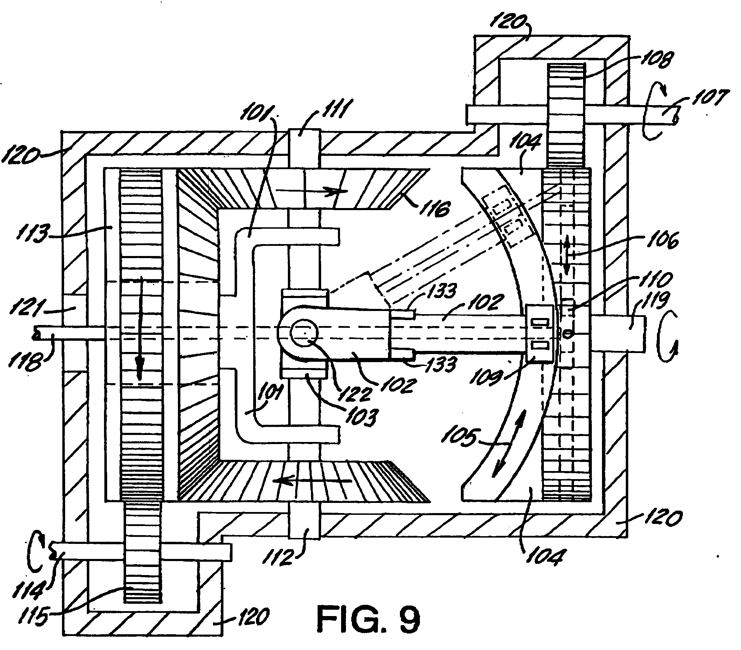

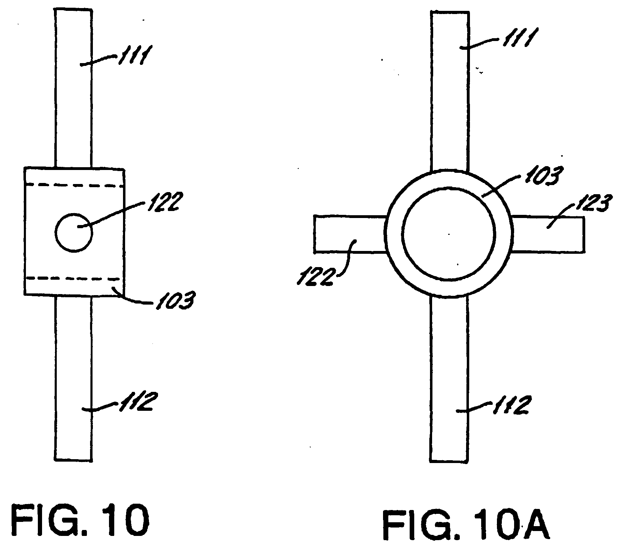

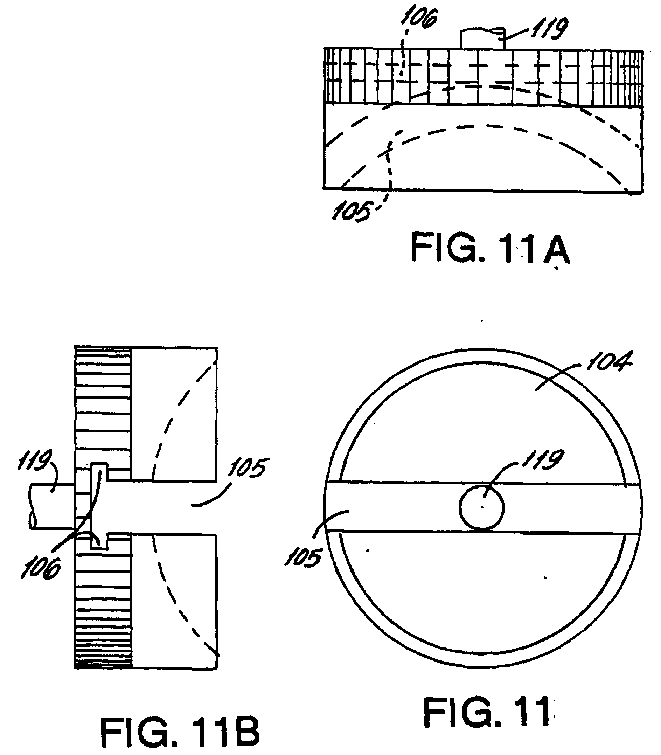

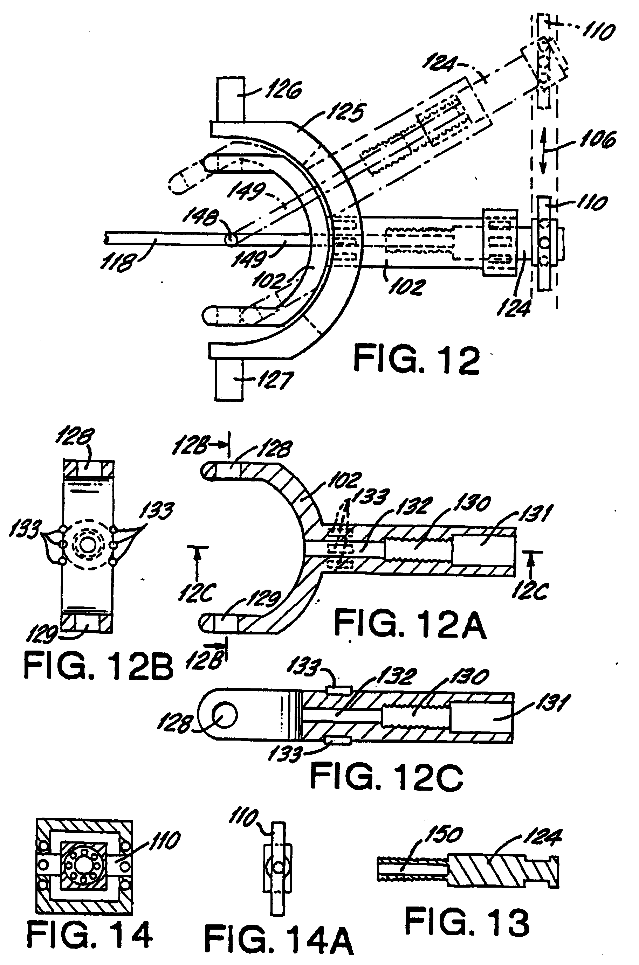

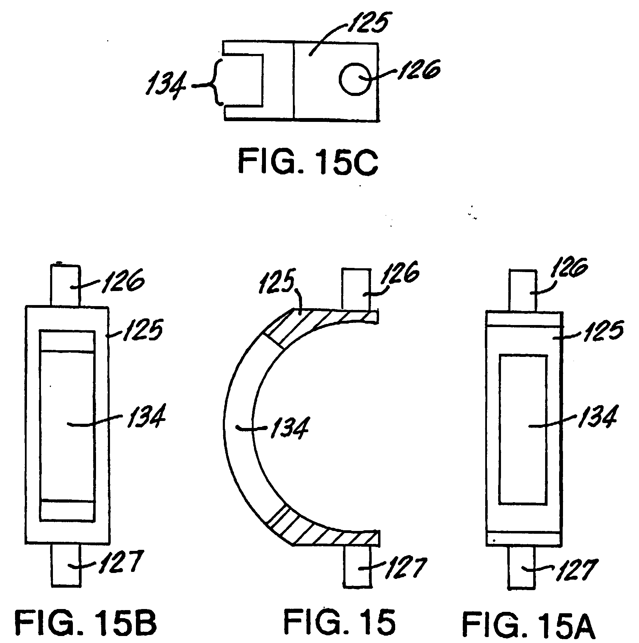

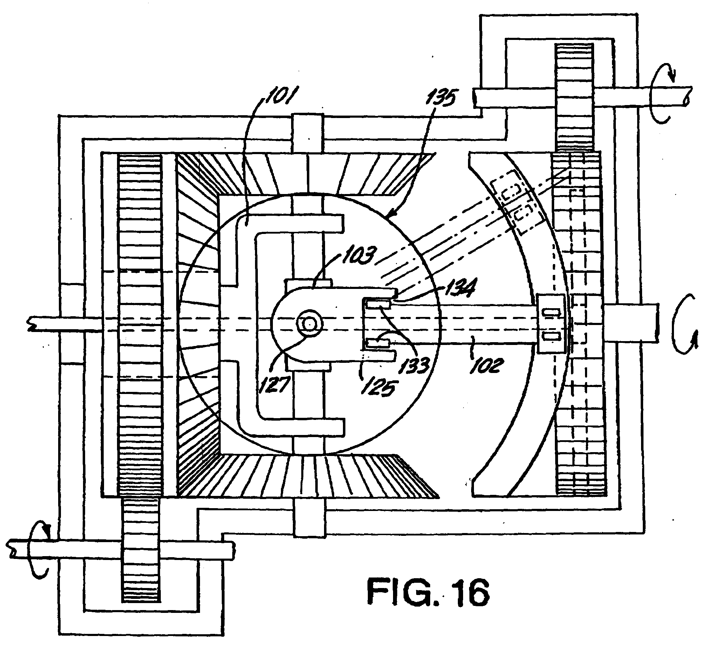

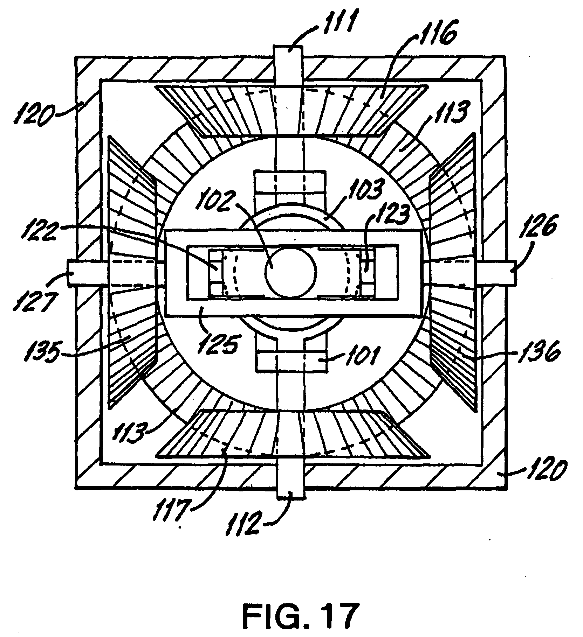

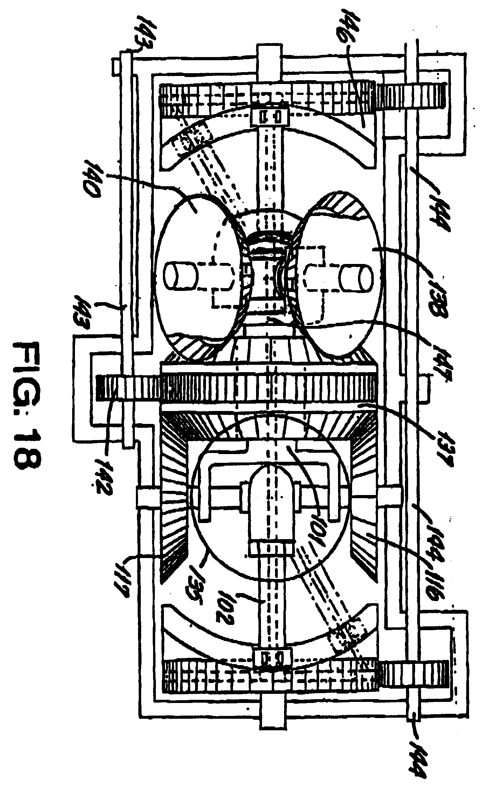

## Claims

1. An infinitely and continuously variable transmission system comprising:
a main frame;
a rotatable input shaft having a retaining pin on a first end thereof;
a main output gear having at least one toothed surface;
an outer ring member pivotally mounted to the main frame about two opposing east-west shaft members;
first and second one-way clutch assemblies mounted on each of the two outer ring shaft members, each said clutch assembly being freely rotatable in one direction of rotation of its carrying shaft and non-rotatable in the opposite direction of rotation of its carrying shaft and having a toothed gear on its outer perimeter for positively engaging the toothed surface of the output gear, said clutch assemblies being mounted such that they each move the main output gear in the same circular direction as their freely rotatable direction of rotation.
a swash plate assembly comprising an outer non-rotating partially hollow portion pivotally coupled to the outer ring member by two north-south shafts mounted on an outer perimeter of the non-rotating portion; an inner circular rotating portion mounted concentrically to the outer non-rotating portion by an intervening main thrust bearing; a thrust bearing retention ring concentrically fixedly attached to the non-rotating portion, said retention ring holding the inner rotating portion, the intervening main thrust bearing and the outer non-rotating portion together as an assembly through an auxiliary thrust bearing intervening between the retention ring and the inner portion; said inner circular rotating portion having a slot formed through its center and a centrally positioned retaining pin housing for pivotally mounting the retaining pin of the input shaft to thereby force the inner portion to co-rotate with the input shaft while at the same time allowing it to pivot with respect to the input shaft thereby causing the outer portion to oscillate about its north-south and east-west axes; wherein the longitudinal axis of each shaft lies in the plane that passes through the point where the longitudinal axis of the retaining pin intersects the longitudinal axis of the input shaft and wherein one clutch assembly positively engages the main output gear through the first one-hundred eighty degrees of rotation of the input shaft and the other clutch assembly positively engages the main output gear through the other one-hundred eighty degrees of rotation of the input shaft; and
pivoting means connected to the swash plate assembly and a shifting member for causing the swash plate assembly to pivot in response to movement of the shifting member, to thereby vary the torque and revolutions per minute of the transmission system.

2. The transmission system of claim 1 wherein the clutch assemblies are mounted between the main frame and the outer ring member.

3. The transmission system of claim 2 further comprising a pair of east-west shafts mounted on an outer perimeter of the non-rotating portion ninety degrees apart from the north-south shafts and a spider having an inner yoke and an outer yoke, said yokes formed by two sets of double legs set ninety degrees apart and connected to each other through a common hub, the inner yoke of the spider pivotally mounted through bearings to the east-west shafts of the swash plate assembly, the outer yoke of the spider having two protruding main shafts vertically fixed at the end of each leg on its north-south axis such that the center of said bearings and the longitudinal axis of said outer yoke main shafts share the same plane; said two spider main shafts being pivotally mounted in bearings attached to the main frame to allow the spider to pivot with respect to the main frame around the north-south axis; and third and fourth one-way clutch assemblies concentrically mounted on each of the two spider main shafts between the spider legs and the main frame and being engaged with the main output gear such that each of the four clutch assemblies positively engages the main output gear through ninety degrees of rotation of the input shaft.

4. An infinitely and continuously variable transmission system comprising:
a main frame;
a rotatable input shaft driving a rotating grooved disc;
a main output gear having at least one toothed surface;
a double yoke assembly having a fixed first yoke, a pivotable second yoke opposed to said first yoke and a central cross assembly connecting the two opposed yokes to each other at their respective forks; said fixed yoke having a central shaft rigidly mounted to the main frame at a rear portion thereof to thereby prevent said first yoke from either rotating or being rotatably displaced; said pivotable second yoke having an attached pivotable yoke shaft that cannot rotate but can be rotatably displaced thereby causing it to oscillate on north-south and eastwest axes with respect to the fixed yoke to which it is pivotally mounted;
said central cross assembly having a central hollow hub having one pair of two opposed co-axial main shafts radially and rigidly mounted on its outer perimeter in the north-south axis and rotatably connected to north-south axis orifices of the fixed yoke, the shaft ends being rotatably housed in the main frame in north-south alignment, and a second pair of two coaxial opposing shafts radially and rigidly mounted on its outer perimeter in the east-west axis and rotatably connected to the east-west axis orifices of the pivotable yoke, all said main and second shafts axes being co-planar to each other such that their theoretical extensions intersect each other vertically at the same point as the hub's center;
first and second one-way clutch assemblies concentrically mounted on each of the two north-south main shafts between the fixed yoke's north-south fork ends and the main frame, each said clutch assembly being freely rotatable in one direction of rotation of its carrying shaft and non-rotatable in the opposite direction of rotation of its carrying shaft and having a toothed gear on its outer perimeter for positively engaging the toothed surface of the output gear said clutch assemblies being mounted such that they each move the main output gear in the same circular direction as their freely rotatable direction of rotation, wherein one clutch assembly positively engages the main output gear through the first one-hundred eighty degrees of rotation of the rotating grooved disc and the other clutch assembly positively engages the main output gear through the other one-hundred eighty degrees of rotation of the rotating grooved disc;
the rotating grooved disc rotatably mounted on the frame at a front portion thereof and connected to the pivotable second yoke's central shaft end through an arc shaped groove, a free end of the pivotable yoke shaft being slidably mounted in the said arc-shaped groove; and
displacement means connected to a shifting member and the pivotable yoke shaft for displacing the pivotable yoke shaft smoothly throughout the length of the arc-shaped grove while the grooved disc is rotating in response to movement of the shifting member, to thereby vary the torque and revolutions per minute of the transmission system.

5. The transmission system of claim 4 further comprising an oscillation conversion assembly aligned in the east-west direction and including a pair of east-west, opposed, protruding, co-axial assembly main shafts having ends rotatably housed in the main frame in east-west alignment, wherein the two main shafts of the central cross assembly and the two main shafts of the conversion assembly are co-planar such that their theoretical extensions vertically intersect each other at a point co-incidental to the point of intersection of the main north-south shafts and the east-west shafts of the central cross assembly; and third and fourth one-way clutch assemblies concentrically mounted on each of the east-west main shafts of the conversion assembly between the conversion assembly and the main frame and being engaged with the main output gear such that each of the four clutch assemblies positively engages the main output gear through ninety degrees of rotation of the input shaft.

6. The transmission system of claim 5 wherein the oscillation conversion assembly comprises a horse shoe having a central hollow semi-circular section through which the pivotable yoke's shaft is slidably mounted such that it can oscillate within such hollow section though an arc in the east-west direction wherein the east-west assembly main shafts are rigidly and vertically attached to the ends of the horse shoe.

7. The transmission system of claim 5 wherein the oscillation conversion assembly comprises a central hub assembly having a hollow middle section and two hollow radial arc shaped sections on its outer perimeter one opposed to the other through one of which axes the pivotable yoke's shaft is slidably mounted such that it can oscillate within such hollow section in the east-west direction wherein the east-west assembly main shafts are rigidly and radially attached to the outer perimeter of such central hub each diametrically opposed to the other.

8. The transmission system of claims 4 or 5 wherein said displacement means comprises an extension arm that can be either screwed-in or screwed-out through a hollow central section of the pivotable yoke shaft, thereby forcing a pivotable and rotatable sliding bogie attached to the extension arm end to slide radially in or out of the straight grooved track of the grooved rotating disc, which is aligned with and positioned behind the arc shaped groove.
